# FASCICULE DE BREVET EUROPEEN

(11) **EP 0 992 910 B1**
(45) Date de publication et mention de la délivrance du brevet: **19.03.2003**
(21) Numéro de dépôt: 99402464.4
(22) Date de dépôt: 07.10.1999
(51) Int. Cl.: G06F 11/14

(54) **Mise à jour d'un journal centralisé d'événements**
Aktualisieren eines zentralisierten Ereignisjournals
Updating a centralised journal of events

(30) Priorité: 09.10.1998 FR 9812652
(43) Date de publication de la demande: 12.04.2000
(73) Titulaire: BULL S.A., 78430 Louveciennes (FR)
(72) Inventeur: Lemee, Daniel, 78990 Elancourt (FR)

(56) Documents cités:
- HOMAN K: "Storing the terminal server and port in VMS accounting" VAX PROFESSIONAL, FEB. 1991, USA, vol. 13, no. 1, pages 17-18, XP002107494 ISSN 8750-9628
- HOMAN K: "Converting LOG PORT to Alpha" DIGITAL SYSTEMS JOURNAL, JAN.-FEB. 1995, USA, vol. 17, no. 1, pages 12-13, XP002107495 ISSN 8750-9628

## Description

La présente invention concerne un procédé d'identification d'un événement dans un journal centralisé d'événements, utilisé dans un système informatique comportant une pluralité de machines administrées par un serveur. Le serveur comprend un système d'exploitation permettant d'administrer cette pluralité de machines.

Il est connu, dans l'art antérieur, des serveurs comprenant un système d'exploitation permettant d'administrer une pluralité de machines. Les serveurs de l'art antérieur possède une application centralisant, dans un journal d'événements, tous les événements qui sont transmis par des applications ou sources fonctionnant sur la pluralité de machines. En règle générale, le journal comprend un certain nombre de champs permettant d'identifier de façon précise l'événement. Ces champs sont caractérisé par des attributs. Ainsi, parmi ces champs, on peut trouver, la date et l'heure de l'événement, le numéro de l'événement, la source émettrice, la catégorie de l'événement, le texte descriptif de l'événement, et le nom de la machine où est stocké le journal d'événements. Lorsqu'un événement survient, l'application générant cet événement par une interface programmatique applicative API (Application Program Interface) envoie une requête vers le gestionnaire du journal de serveur pour écrire l'événement dans le journal d'événements. Cette requête comprend l'identification de l'application, ainsi que tous les champs, listés précédemment, nécessaires à la description de l'événement. Cependant, les serveurs de l'art antérieur, permettant de mettre à jour un journal d'événements, ne permettent pas d'identifier sur quelle machine du système informatique l'événement s'est produit. En effet, dans le journal d'événements de l'art antérieur, seules les applications générant l'événement et la machine sur laquelle est stocké le journal sont identifiées avec précision. Or, la connaissance du lieu, c'est-à-dire de la machine, sur laquelle l'événement est survenu, est très utile pour résoudre rapidement les problèmes liés à la survenance de l'événement, notamment lorsque l'événement concerne, par exemple, une violation d'accès à une machine du système ou bien un problème de capacité de stockage d'une machine.

Le document HOMAN K.: "Storing the terminal server and port in VMS accounting," VAX PROFESSIONALS, FEV. 1991, USA, Vol.13, No.1, pages 17-18, ISSN 8750-9628, révéle un système d'identification d'un événement de LOGIN dans un journal d'événements utilisant une fonction de AUDIT dans un système de VMS comprenant un serveur de terminal de même que un port de terminal.

La présente invention a donc pour objet de pallier les inconvénients de l'art antérieur en proposant un service de mise à jour d'un journal centralisé d'événements permettant d'identifier la ou les machines sur lesquelles sont survenus les différents événements inscrits dans le journal sans modifier fondamentalement le fonctionnement du système informatique.

A cet effet, l'invention a pour objet un procédé d'identification d'un événement dans un journal centralisé d'événement inclus dans un serveur d'un système informatique, et associé à un gestionnaire de journal, ledit serveur administrant au moins une machine du système informatique, ladite machine faisant fonctionner au moins une application de capture destinée à générer des événements, caractérisé en ce qu'il comprend :
- une étape de capture, par ladite applications de capture, d'un événement comprenant des informations permettant d'identifier, entre autres, la machine - sur laquelle est survenu l'événement,
- une étape de transmission, par ladite application de capture, de cet événement au serveur,
- une étape de réception de cet événement par un service spécifique de ce serveur,
- une étape de construction d'un message d'événements par le service spécifique à partir des informations contenues dans l'événement, le message d'événements incluant une identification du service ainsi que ladite identification de la machine sur laquelle est survenu l'événement, et
- une étape d'écriture du message d'événements ainsi construit par le service spécifique dans le journal centralisé d'événements.

L'invention a aussi pour objet un système informatique comprenant un journal centralisé d'événement inclus dans un serveur associé à un gestionnaire de journal, ledit serveur administrant au moins une machine du système informatique, ladite machine faisant fonctionner au moins une application de capture destinée à générer des événements, caractérisé en ce qu'il comprend un service mettant en oeuvre le procédé.

D'autres particularités et avantages de la présente invention apparaîtront plus clairement à la lecture de la description ci-après faite en référence aux dessins annexés dans lesquels :
- la figure 1 représente un système informatique permettant de mettre en oeuvre le procédé selon l'invention.
- la figure 2 représente une édition d'un journal d'événements de l'art antérieur.

Afin de mieux comprendre l'invention, il convient tout d'abord de décrire le fonctionnement des procédés de mise à jour d'un journal d'événements de l'art antérieur.

Tout d'abord, un journal d'événements centralise toutes les informations que des applications situées sur des machines distantes d'un système informatique du type réseau et/ou multipostes, ont recueilli sur lesdites machines. Ces informations contiennent, par exemple, des indications sur les performances ou les taux d'occupation d'une machine ou indiquent un dysfonctionnement ou un incident survenant sur une machine.

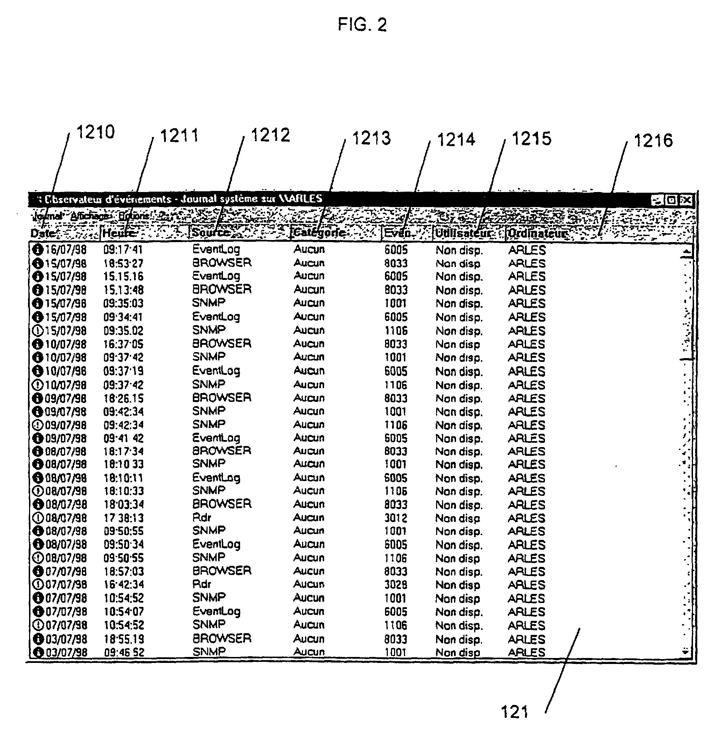

Ce journal est en général édité par une application particulière d'un serveur qui administre la ou les machines ou stations. La figure 2 représente un exemple d'une édition d'un journal d'événements de l'art antérieur. Afin de faciliter la lecture de chaque information, ces informations sont partagées selon un nombre déterminé de champs 1210, 1211, 1213, 1214, 1215, 1216. L'ensemble des champs permet de décrire de manière formalisée et précise les événements correspondant aux informations. Ainsi, l'art antérieur définit, par exemple, les champs suivants :
- la date 1210 et l'heure 1211 de survenance de l'événement,
- le numéro de l'événement 1214,
- la source 1213, c'est-à-dire l'application, qui a généré l'événement,
- la catégorie 1212 de l'événement, c'est-à-dire sa sévérité, ou gravité par rapport au fonctionnement de la machine,
- l'utilisateur 1215 de la machine,
- la machine 1216 sur laquelle est installé le journal d'événements,
- éventuellement, le texte de l'événement correspondant, par une courte description.

On peut noter qu'aucun champ ne permet d'identifier la machine sur laquelle est survenu l'événement. En effet, le fonctionnement des applications d'un serveur de l'art antérieur gérant un journal d'événements est le suivant. Lorsqu'une application d'une machine et/ou station du réseau et/ou du système multipostes, administrée par le serveur, veut écrire une information dans le journal d'événements, celle-ci se déclare au serveur en indiquant son nom. Le serveur reconnaît l'application et renseigne ensuite les différents champs 1210, 1211, 1212, 1213, 1214, 1215 du journal et indique notamment, dans le champ 1212 correspondant à la source, le nom de l'application qui vient de s'identifier pour écrire une information dans le journal. Ainsi, seul le nom de l'application génératrice de l'événement apparaît dans le journal. Le nom de la machine sur laquelle fonctionne l'application, c'est-à-dire le nom de la machine sur laquelle est survenu l'événement, n'est pas indiqué.

Afin de permettre l'identification de la machine sur laquelle est survenu l'événement, le procédé selon l'invention met en oeuvre un service spécifique du serveur.

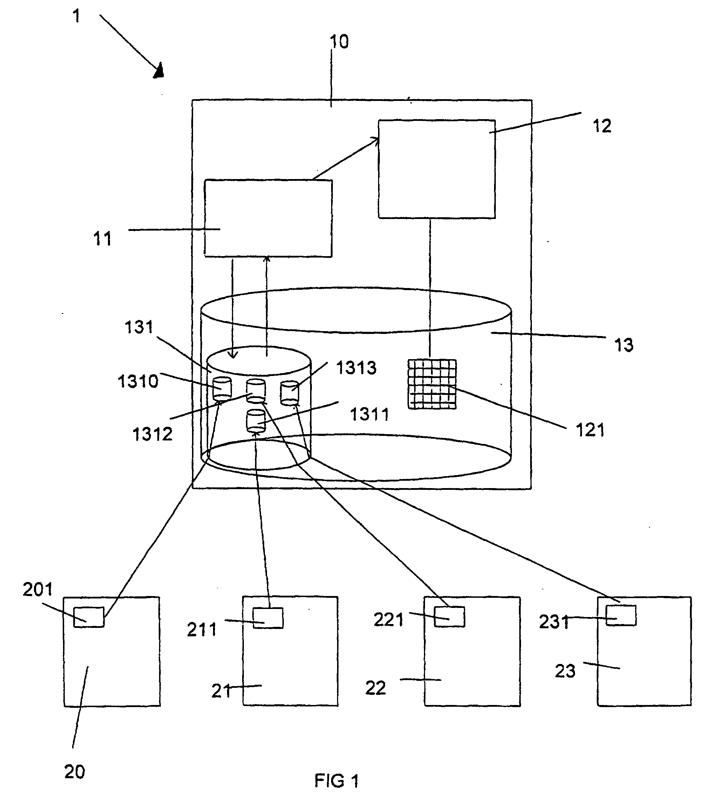

La figure 1 représente un système informatique 1 permettant de mettre en oeuvre le procédé selon l'invention. Comme il vient d'être décrit, un système informatique 1 du type réseau et/ou multipostes comprend en général un serveur 10 administrant une pluralité de machines 20, 21, 22, 23 et/ou stations constituant un réseau et/ou un système multipostes. Le serveur 10 peut comprendre des moyens 13 de mémorisation de type disque dur et un gestionnaire de journal 12 permettant de gérer un journal 121 d'événements survenant sur le réseau et/ou le système multipostes. Chaque machine et/ou station 20, 21, 22, 23 comprend au moins un outil respectif 201, 211, 221, 231 particulier, par exemple de type agent, API, application, tache de fond, etc, destiné à envoyer des événements survenant sur leur machine 20, 21, 22, 23 respective. Dans la suite de la description, une application de capture d'événements désigne n'importe quels outils cités précédemment. Chaque machine 20, 21, 22, 23 peut comprendre également d'autres applications, telles que traitement de texte, gestionnaire de base de données, etc..

Le serveur 10 comprend donc un journal centralisé d'événements 121 auquel est associé un gestionnaire de journal 12. Dans l'exemple illustré, le serveur 10 comprend des moyens 13 de mémorisation. Ces moyens 13 de mémorisation communiquent avec les différentes machines. Dans un autre exemple, le serveur peut ne pas comprendre de moyens de mémorisation.

Le serveur 10 comprend également un outil pour mettre à jour le journal 121 d'événements à partir des événements reçus. Cet outil communique directement avec le gestionnaire de journal 12. Dans l'exemple illustré, cet outil s'intercale entre les moyens 13 de mémorisation et le gestionnaire de journal 12. La requête issue de cet outil comprend tous les champs nécessaires à la description de l'événement.

Le gros problème est qu'il n'y a aucun champs qui permette d'identifier sur quelle machine du système informatique un événement s'est produit.

A cet effet, le serveur 10 conforme à la présente invention comprend un service 11 spécifique qui exécute les demandes d'écriture d'événements issus des machines 20, 21, 22, 23 dans le journal 121 d'événements. Le service 11 peut être inclus dans les moyens 13 de mémorisation. Pour pouvoir écrire les événements dans le journal 121, le service 11 spécifique doit avoir accès aux informations recueillies par chaque application 201, 211, 221, 231 de capture d'événements sur chaque machine 20, 21, 22, 23. A cet effet, dès qu'un événement se produit sur une quelconque machine 20, 21, 22, 23, l'application 201, 211, 221, 231 récoltant les informations sur l'événement envoie un message contenant toutes les informations sur l'événement vers le serveur 10. Dès la réception, dans l'exemple illustré, ce message est stocké sur les moyens 13 de mémorisation du serveur 10. Selon une variante, ce message peut être directement transmis au service 11 spécifique. Ces informations sont stockées, par exemple, dans un fichier 1310, 1311, 1312, 1313 affecté à chaque machine 20, 21, 22, 23, le nom de chaque fichier correspondant par exemple au nom de la machine à laquelle le fichier est affecté. Ces fichiers 1310, 1311, 1312, 1313 sont, par exemple, créés par les applications 201, 211, 221, 231 de capture d'événements, lors de leur installation sur leur machine respective 20, 21, 22, 23. Tous ces fichiers 1310, 1311, 1312, 1313 sont, par exemple regroupés dans un répertoire 131 spécifique, pour des raisons qui seront décrites ultérieurement. Le fichier 1310, 1311, 1312, 1313 mémorisé est, par exemple, en format texte et contient les informations nécessaires pour que le service 11 spécifique construise un message qui sera inscrit dans le journal centralisé d'événements 121. Un exemple de ce fichier est donné en annexe 1. Les informations envoyées par les applications 201, 211, 221, 231 de capture d'événements comprennent, par exemple, le nom de l'application NOTEPAD, ligne 4 de l'annexe 1 émettrice du message ainsi que le nom de la machine MISTRAL, annexe 1 sur laquelle l'application est installée. Ainsi, grâce aux informations stockées, associées à chaque machine, sur les moyens 13 de mémorisation du serveur 10, une fonction de surveillance des écritures par le serveur 10 permet de réveiller le service 11 spécifique constitué d'un module de programme qui construit un message pour demander au gestionnaire 12 l'écriture d'un événement dans le journal centralisé d'événements 121. Comme expliqué précédemment, en général, les serveurs de l'art antérieur renseignent le champ du journal correspondant à la source de l'événement constitué par l'application, dès que l'application qui envoie un message d'écriture dans le journal s'est identifiée.

A partir des informations stockées sur les moyens 13 de mémorisation du serveur 10, le service 11 spécifique construit un message d'événements à destination du journal centralisé d'événement 121. De préférence, ce message comprend des champs identiques de l'art antérieur à la différence du champ source. Le champ est remplacé par un champ ayant un formalisme particulier. En effet, dans l'art antérieur, ce champ permet seulement d'identifier l'application génératrice de l'événement. Selon l'invention, ce champ est divisé en au moins un sous-champ.

Dans l'exemple illustré, ce champ est divisé en deux sous-champ. Un premier sous-champ pour identifier le service 11 et un deuxième sous-champ pour identifier la machine et/ou la station sur laquelle s'est produit l'événement. Pour que ce nouveau champ soit inscrit dans le journal d'événements du serveur 12, le service 11 spécifique se déclare au gestionnaire de journal 12 comme étant une application dont le nom est formé par au moins une chaîne de caractères. Une chaîne de caractère est associée à un sous-champ. Dans l'exemple illustré, le service 11 spécifique se déclare au gestionnaire de journal 12 comme étant une application dont le nom est formé par une première chaîne de caractères correspondant au nom du service 11 et par une deuxième chaîne de caractères correspondant au nom ou à l'identification de la machine sur laquelle s'est produit l'événement. De préférence, les première et deuxième chaînes de caractères sont séparées par un séparateur déterminé, par exemple, « / » ou « : ». Ainsi, le gestionnaire 12 renseigne le champ correspondant à la source avec le nom fourni par le service 11 spécifique, c'est-à-dire avec la première et deuxième chaînes de caractères.

Les informations permettant de former le champ identifiant la machine, sont, par exemple, capturées par le service 11 spécifique dans un fichier respectif 1310, 1311, 1312, 1313, fig. 1 affecté à chaque machine 20, 21, 22, 23, fig. 1. Une autre variante consiste à utiliser le nom du fichier affecté à chaque machine pour construire la deuxième chaîne de caractères du champ source, si ce nom de fichier correspond au nom de la machine. Dans le cas contraire, le service 11 utilise, par exemple, une table de correspondance qui permet d'associer chaque nom de fichier à un nom de machine respectivement de la station, du réseau respectivement du système multipostes et donc de renseigner la deuxième chaîne de caractères.

Le service 11 spécifique est réveillé par le serveur 10 dès qu'un message d'une application 201, 211, 221, 231 de capture d'événements est stocké sur les moyens 13 de mémorisation du serveur 10. A cet effet, les fichiers 1310, 1311, 1312, 1313 affectés à chaque machine 20, 21, 22, 23 sont, par exemple, regroupés dans un répertoire 131 spécifique, des moyens 13 de mémorisation du serveur 10. En règle générale, les serveurs de l'art antérieur possèdent une fonction qui permet de surveiller les opérations d'écriture sur un répertoire spécifié. Ainsi, en utilisant cette fonction particulière connue du serveur 10 pour réveiller le service spécifique 11, le service 11 spécifique ne sera réveillé par le serveur 10 uniquement lorsqu'une opération d'écriture sera détectée par le serveur 10 sur le répertoire 131 spécifique regroupant tous les fichiers 1310, 1311, 1312, 1313 affectés à chaque machine 20, 21, 22, 23 pour stocker les informations sur les événements. Lorsque le service 11 spécifique est ainsi réveillé par le serveur 10, il scrute dans un premier temps chaque fichier 1310, 1311, 1312, 1313 du répertoire 131 spécifique pour repérer quel fichier a été modifié. Lorsque le fichier qui a été modifié est repéré, le service 11 spécifique lit son contenu, puis par exemple vide le contenu du fichier qu'il vient de lire. Ainsi, tous les fichiers 1310, 1311, 1312, 1313 sont vides tant qu'une application d'une des machines 20, 21, 22, 23 n'a pas envoyé de message contenant les informations sur un événement. Cette caractéristique permet au service 11 spécifique d'identifier plus rapidement le fichier du répertoire 131 spécifique qui est modifié, lorsque le service 11 spécifique vient d'être réveillé par le serveur 10. Après que le message d'événements, correspondant aux informations du fichier 1310, 1311, 1312, 1313, soit écrit dans le journal d'événements du serveur, le service 11 spécifique est en sommeil jusqu'à ce que le serveur 10 le réveille de nouveau.

Lors de l'installation du service 11 spécifique sur le serveur 10, le service 11 spécifique effectue une étape d'initialisation. Cette étape d'initialisation permet au service 11 spécifique, premièrement de se déclarer au serveur 10 en tant que service particulier de ce dernier, deuxièmement de créer, le cas échéant, sur les moyens 13 de mémorisation du serveur 10, le répertoire 131 spécifique regroupant tous les fichiers 1310, 1311, 1312, 1313 affectés à chaque machine 20, 21, 22, 23 pour stocker les informations sur les événements, et troisièmement d'effectuer les opérations nécessaires pour que, le cas échéant, la fonction de surveillance des écritures du serveur réveille le service 11 spécifique dès qu'une opération d'écriture a lieu sur le répertoire 131 spécifique.

Lorsqu'une nouvelle machine est installée dans le système 1 informatique de la figure 1, le service 11 spécifique déclare au serveur 10 chaque application de cette nouvelle machine, comme étant une source à part entière, susceptible d'écrire des messages dans le journal d'événements. Autrement dit, la déclaration de chaque application est effectuée par le service 11 spécifique de la manière suivante. Le service 11 spécifique envoie un message au gestionnaire 12 en se déclarant lui-même comme une nouvelle application ayant un nom formé par une première chaîne de caractères correspondant au nom du service 11, et une deuxième chaîne de caractères correspondant au nom ou à l'identification de la machine émettrice. Ces deux chaînes de caractères sont, par exemple, séparées par un séparateur déterminé. Ainsi, le service 11 crée une sorte de source fictive pour le gestionnaire de journal 12 avec un nom formé par la première et deuxième chaînes de caractères. Lors de l'installation du service 11 spécifique selon l'invention, par exemple, pendant l'étape d'initialisation du service 11 spécifique, chaque application 201, 211, 221, 231 de capture d'événements de chaque machine 20, 21, 22, 23 du système 1 informatique administré par le serveur 10 est déclarée selon la même procédure que pour l'installation d'une nouvelle machine. Ainsi, contrairement à l'art antérieur où une source correspond à une application quelle que soit la machine où l'application est installée, dans la présente invention, chaque application de chaque machine 20, 21, 22, 23 est considérée par l'intermédiaire du service 11 spécifique, comme une source à part entière. Une application peut donc donner lieu à la création, par le service 11 spécifique, de plusieurs sources pour gestionnaire 12, si cette application est installée sur plusieurs machines distinctes.

Le procédé selon l'invention comprend donc :
- une étape de capture, par ladite applications de capture, d'un événement comprenant des informations permettant d'identifier, entre autres, la machine 20-23 sur laquelle est survenu l'événement,
- une étape de transmission, par ladite application de capture, de cet événement au serveur 10,
- une étape de réception de cet événement par un service 11 spécifique de ce serveur,
- une étape de construction d'un message d'événements par le service 11 spécifique à partir des informations contenues dans l'événement, le message d'événements incluant une identification du service 11 ainsi que ladite identification de la machine 20, 21, 22, 23 sur laquelle est survenu l'événement, et
- une étape d'écriture du message d'événements ainsi construit par le service 11 spécifique dans le journal 121 centralisé d'événements.

On a vu que le message d'événement est construit de sorte que le service 11 spécifique se déclare au gestionnaire de journal 12 comme étant une application dont le nom est formé par au moins deux chaînes de caractères, une première chaîne de caractères correspondant au nom du service 11, et une deuxième chaîne de caractères correspondant au nom de la machine 20, 21, 22, 23 où est survenu l'événement, les chaînes de caractères étant séparées entre elles par des moyens de séparation.

Selon un mode de réalisation préférentiel, il consiste à affecter à la machine des moyens 13 de mémorisation de type fichiers 1310, 1311, 1312, 1313, à regrouper ces fichiers (1310, 1311, 1312, 1313) sous un même répertoire (131) des moyens (13) de mémorisation du serveur (10), et à utiliser le nom du fichier affecté à chaque machine pour construire la deuxième chaîne de caractères, si ce nom de fichier correspond au nom de la machine. Selon une autre variante, le service 11 utilise une table de correspondance qui permet d'associer chaque nom de fichier à un nom de machine et ainsi construire la deuxième chaîne de caractères du champ source.

Selon ce mode de réalisation, la réception de l'événement par ladite application de capture comprend une étape d'enregistrement de cet événement dans le fichier 1310, 1311, 1312, 1313 affecté à la machine sur laquelle est survenu cet événement, et une étape de lecture de ce fichier par le service 11 spécifique.

On a vu aussi que la machine peut être. une station du réseau ou être incluse dans un système multiposte. Une troisième chaîne de caractères peut donc correspondre au nom de la station du réseau et/ou du système multiposte associé à la machine 20, 21, 22, 23 sur laquelle est survenu l'événement.

De préférence, le message transmis par l'application de capture 201, 211, 221, 231 est effacé par le service 11 après ladite étape de lecture du fichier 1310, 1311, 1312, 1313.

On a vu également que, selon le mode de réalisation, le procédé de l'invention inclut une étape préalable d'installation. A cet effet, à l'initialisation du serveur 10 , une étape d'installation du service 11 entre le gestionnaire 12 du journal centralisé 121 du serveur 10 et au moins la machine 20-23, l'étape d'installation comportant une étape de déclaration au serveur en tant que service, et une étape de création du répertoire 131 spécifique regroupant tous les fichiers 1310 à 1313 associés aux machine 20-23 . Selon le mode de réalisation, l'étape d'installation comprend une étape d'exécution d'opérations nécessaires pour la mise en oeuvre d'une fonction de surveillance d'écriture sur le répertoire 131 spécifique pour déclencher le réveil du serveur spécifique 11 dès qu'une opération d'écriture a lieu dans le répertoire 131 spécifique.

L'invention a aussi pour objet un système informatique comprenant un journal centralisé d'événement 121 inclus dans un serveur 10 associé à un gestionnaire 12 de journal, ledit serveur 10 administrant au moins une machine 20-23 du système informatique, ladite machine 20-23 faisant fonctionner au moins une application de capture 201, 211, 221, 231 destinée à générer des événements, caractérisé en ce qu'il comprend un service 11 mettant en oeuvre le procédé.

On conçoit que le procédé selon l'invention permet d'augmenter la quantité d'informations fournies par le journal d'événements d'un serveur de l'art antérieur en fournissant le nom de la machine sur laquelle est survenu l'événement. Ceci permet à l'administrateur du réseau et/ou du système multipostes de savoir immédiatement sur quelle machine intervenir. De plus, comme l'a montré la description, l'installation du service 11, spécifique permettant de mettre en oeuvre le procédé, ne nécessite pas de modifier le fonctionnement fondamentalement habituel du système informatique. A titre d'exemple non limitatif, ce procédé est utilisable avec le système d'administration Windows NT de la société Microsoft qui, jusqu'à présent, sait tenir un journal des événements survenu sur la machine sur laquelle le système Windows NT est installé.

Il est clair que d'autres modifications à la portée de l'homme du métier entrent dans le cadre de l'invention.

### ANNEXE 1

MISTRAL@@3@@1@@Taux d'occupation disque C: > 90 % (93 %)@2
MISTRAL@@3@@5@@Mémoire haute insuffisante (5 Ko)@1
MISTRAL@NOTEPAD@2@3@Bloc-notes@5@Le texte du fichier AUTOEXEC.BAT a été modifié. Voulez-vous enregistrer les modifications ?@1
MISTRAL@WINFILE@2@2@Erreur de suppression de fichier@1@Le Gestionnaire de fichiers ne peut pas supprimer C:\ISMOM\PCALERT\A6DFSET.EXE: Le fichier spécif@1
MISTRAL@WINFILE@2@2@Erreur de suppression de fichier@1@Le Gestionnaire de fichiers ne peur pas supprimer le répertoire C:\ISMOM\PCALERT: @1
MISTRAL@NOTEPAD@2@3@Bloc-notes@5@Le texte du fichier C:\WINDOWS\SYSTEM.INI a été modifié. Voulez-vous enregistrer les modifications ?@1
MISTRAL@NOTEPAD@2@3@Bloc-notes@5@Le texte du fichier C.\WINDOWS\WIN.INI a été modifié. Voulez-vous enregistrer les modifications ?@1
MISTRAL@@3@@1@@Taux d'occupation disque C: > 90 % (93 %)@2
MISTRAL@@3@@5@@Mémoire haute insuffisante (5 Ko)@1
MISTRAL@@4@@Problème utilisateur signalé@@coucou@1
MISTRAL@@4@@Problème utilisateur signalé@@drgtyuio@1
MISTRAL@NOTEPAD@2@3@Bloc-notes@5@Le texte du fichier C:\WINDOWS\WIN.INI a été modifié. Voulez-vous enregistrer les modifications ?@1
MISTRAL@NOTEPAD@2@3@Bloc-notes@5@Le texte du fichier C:\WINDOWS\SYSTEM.INI a été modifié. Voulez-vous enregistrer les modifications ?@1
ISM Alert Service stopped
ISM Alert Service stopped
MISTRAL@@3@@1@@Taux d'occupation disque C: > 90 % (93 %)@2
MISTRAL@@4@@Problème utilisateur signalé@@qsdfghjklmù@1
MISTRAL@@3@@5@@Mémoire haute insuffisante (5 Ko)@1
MISTRAL@NOTEPAD@2@3@Bloc-notes@5@Le texte du fichier C:\WINDOWS\WIN.INI a été modifié. Voulez-vous enregistrer les modifications ?@1
MISTRAL@NOTEPAD@2@3@Bloc-notes@5@Le texte du fichier C:\WINDOWS\SYSTEM.INI a été modifié. Voulez-vous enregistrer les modifications ?@1
MISTRAL@@3@@1@@Taux d'occupation disque C: > 90 % (93 %)@2
MISTRAL@@4@@Problème utilisateur signalé@@bonjour@1
MISTRAL@@3@@5@@Mémoire haute insuffisante (5 Ko)@1
MISTRAL@@3@@1@@Taux d'occupation disque C: > 90 % (93 %)@2
MISTRAL@@3@@5@@Mémoire haute insuffisante (5 Ko)@1
MISTRAL@@3@@1@@Taux d'occupation disque C: > 90 % (93 %)@2
MISTRAL@@3@@5@@Mémoire haute insuffisante (5 Ko)@1
MISTRAL@WINPRO@1@@FatalAppExit@0@ABNORMAL PROGRAM TERMINATION@3
MISTRAL@WINPRO@1@@Erreur de l'application@1@ABNORMAL PROGRAM TERMINATION@3
MISTRAL@WINFILE@2@3@Impossible d'exécuter le programme@1@Le Gestionnaire de fichiers ne peut pas trouver le fichier (ou un de ses composants). Vérifiez @3
MISTRAL@WINFILE@2@3@Impossible d'exécuter le programme@1@Le Gestionnaire de fichiers ne peut pas trouver le fichier (ou un de ses composants). Vérifiez @3
MISTRAL@WINFILE@2@3@Confirmer l'opération de la souris@4@Voulez-vous copier les fichiers sélectionnés ou les répertoires vers C:\?@1
MISTRAL@W16IIHRD@1@@Erreur de fichier @1@Ne trouve pas CPUINF16.DLL@3
MISTRAL@WINFILE@2@3@Impossible d'exécuter le programme@1@Il n'y a aucune application associée à ce fichier. Choisissez Fichier Associer pour créer une a@3
MISTRAL@WINFILE@2@3@Impossible d'exécuter le programme@1@Il n'y a aucune application associée à ce fichier. Choisissez Fichier Associer pour créer une a@3
MISTRAL@WINFILE@2@3@Impossible d'exécuter le programme@1@Il n'y a aucune application associée à ce fichier. Choisissez Fichier Associer pour créer une a@3

## Revendications

1. Procédé d'identification d'un événement dans un journal centralisé d'événement (121) inclus dans un serveur (10) d'un système informatique, et associé à un gestionnaire (12) de journal, ledit serveur (10) administrant au moins une machine (20-23) du système informatique, ladite machine (20-23) faisant fonctionner au moins une application de capture (201, 211, 221, 231) destinée à générer des événements, **caractérisé en ce qu'**il comprend :
- une étape de capture, par ladite applications de capture, d'un événement comprenant des informations permettant d'identifier, entre autres, la machine (20-23) sur laquelle est survenu l'événement,
- une étape de transmission, par ladite application de capture, de cet événement au serveur (10),
- une étape de réception de cet événement par un service (11) spécifique de ce serveur,
- une étape de construction d'un message d'événements par le service (11) spécifique à partir des informations contenues dans l'événement, le message d'événements incluant une identification du service (11) spécifique ainsi que ladite identification de la machine (20, 21, 22, 23) sur laquelle est survenu l'événement, et
- une étape d'écriture du message d'événements ainsi construit par le service (11) spécifique dans le journal (121) centralisé d'événements.

2. Procédé selon la revendication 1, **caractérisé en ce que** le message d'événement est construit de sorte que le service (11) spécifique se déclare au gestionnaire de journal (12) comme étant une application dont le nom est formé par au moins deux chaînes de caractères, une première chaîne de caractères correspondant au nom du service (11), et une deuxième chaîne de caractères correspondant au nom de la machine (20, 21, 22, 23) où est survenu l'événement, les chaînes de caractères étant séparées entre elles par des moyens de séparation.

3. Procédé selon la revendication 1 ou 2, **caractérisé en ce qu'**il consiste à affecter à la machine des moyens (13) de mémorisation de type fichiers (1310, 1311, 1312, 1313), à regrouper ces fichiers (1310, 1311, 1312, 1313) sous un même répertoire (131) des moyens (13) de mémorisation du serveur (10), et à utiliser le nom du fichier affecté à chaque machine pour construire la deuxième chaîne de caractères, si ce nom de fichier correspond au nom de la machine.

4. Procédé d'identification selon la revendication 2 ou 3, **caractérisé en ce que** le service (11) utilise une table de correspondance qui permet d'associer chaque nom de fichier à un nom de machine et ainsi construire la deuxième chaîne de caractères du champ source.

5. Procédé d'identification selon la revendication 3 ou 4, **caractérisé en ce que** la réception de l'événement par ladite application de capture comprend une étape d'enregistrement de cet événement dans le fichier (1310, 1311, 1312, 1313) affecté à la machine sur laquelle est survenu cet événement, et une étape de lecture de ce fichier par le service (11) spécifique.

6. Procédé selon l'une des revendications 2 à 5, **caractérisé en ce qu'**une troisième chaîne de caractères correspond au nom de la station du réseau et/ou du système multiposte associé à la machine (20, 21, 22, 23) sur laquelle est survenu l'événement.

7. Procédé selon la revendication 5 ou 6, **caractérisé en ce que** le message transmis par l'application de capture (201, 211, 221, 231) est effacé par le service (11) après ladite étape de lecture du fichier (1310, 1311, 1312, 1313).

8. Procédé selon l'une des revendications 3 à 7, **caractérisé en ce qu'**il comporte, à l'initialisation du serveur (10), une étape d'installation du service (11) entre le gestionnaire (12) du journal centralisé (121) du serveur (10) et au moins la machine (20-23), l'étape d'installation comportant une étape de déclaration au serveur en tant que service, et une étape de création du répertoire (131) spécifique regroupant tous les fichiers (1310 à 1313) associés aux machine (20-23).

9. Procédé selon la revendication 8, **caractérisé en ce que** l'étape d'installation comprend une étape d'exécution d'opérations nécessaires pour la mise en oeuvre d'une fonction de surveillance d'écriture sur le répertoire (131) spécifique pour déclencher le réveil du serveur spécifique (11) dès qu'une opération d'écriture a lieu dans le répertoire (131) spécifique.

10. Système informatique comprenant un journal centralisé d'événement (121) inclus dans un serveur (10) associé à un gestionnaire (12) de journal, ledit serveur (10) administrant au moins une machine (20-23) du système informatique, ladite machine (20-23) faisant fonctionner au moins une application de capture (201, 211, 221, 231) destinée à générer des événements, **caractérisé en ce qu'**il comprend un service (11) mettant en oeuvre le procédé défini par l'une des revendications 1 à 9.

## Patentansprüche

1. Verfahren zum Identifizieren eines Ereignisses in einem zentralisierten Ereignisjournal (121), das in einem Server (10) eines Datenverarbeitungssystems enthalten ist und dem ein Journal-Manager (12) zugeordnet ist, wobei der Server (10) das Management wenigstens einer Maschine (20-23) des Datenverarbeitungssystems ausführt, wobei die Maschine (20, 23) wenigstens eine Abfangsanwendung (201, 211, 221, 231) ausführt, die dazu bestimmt ist, Ereignisse zu erzeugen, **dadurch gekennzeichnet, daß** es umfaßt:
- einen Schritt, bei dem durch die Abfangsanwendungen ein Ereignis abgefangen wird, das Informationen enthält, die unter anderem die Identifizierung der Maschine (20-23) ermöglichen, in der das Ereignis auftritt,
- einen Schritt, bei dem durch diese Abfangsanwendung dieses Ereignis an den Server (10) übertragen wird,
- einen Schritt, bei dem dieses Ereignis von einem spezifischen Dienst (11) dieses Servers empfangen wird,
- einen Schritt, bei dem von dem spezifischen Dienst (11) anhand der in dem Ereignis enthaltenen Informationen eine Ereignisnachricht konstruiert wird, die eine Identifizierung des spezifischen Dienstes (11) sowie die Identifizierung der Maschine (20, 21, 22, 23), in der das Ereignis aufgetreten ist, enthält, und
- einen Schritt, bei dem die auf diese Weise von dem spezifischen Dienst (11) konstruierte Ereignisnachricht in das zentralisierte Ereignisjournal (121) geschrieben wird.

2. Verfahren nach Anspruch 1, **dadurch gekennzeichnet, daß** die Ereignisnachricht in der Weise konstruiert wird, daß sich der spezifische Dienst (11) dem Journal-Manager (12) gegenüber als eine Anwendung deklariert, deren Namen durch wenigstens zwei Zeichenketten gebildet ist, wovon eine erste dem Namen des Dienstes (11) entspricht und eine zweite dem Namen der Maschine (20, 21, 22, 23), in der das Ereignis aufgetreten ist, entspricht, wobei die Zeicheriketten voneinander durch Trennmittel getrennt sind.

3. Verfahren nach Anspruch 1 oder 2, **dadurch gekennzeichnet, daß** es darin besteht, der Maschine Mittel (13) für die Speicherung von Dateien (1310, 1311, 1312, 1313) zuzuweisen, diese Dateien (1310, 1311, 1312, 1313) im selben Verzeichnis (131) der Speichermittel (13) des Servers (10) zusammenzufassen und den Namen der Datei, die der jeweiligen Maschine zugewiesen ist, für die Konstruktion der zweiten Zeichenkette zu verwenden, falls dieser Dateiname dem Namen der Maschine entspricht.

4. Ideritifizierungsverfahren nach Anspruch 2 oder 3, **dadurch gekennzeichnet, daß** der Dienst (11) eine Korrespondenztabelle verwendet, die ermöglicht, jeden Dateinamen einem Maschinennamen zuzuordnen und auf diese Weise die zweite Zeichenkette des Quellfeldes zu konstruieren.

5. Identifizierungsverfahren nach Anspruch 3 oder 4, **dadurch gekennzeichnet, daß** der Empfang des Ereignisses durch die Abfangsanwendung einen Schritt, bei dem dieses Ereignis in der Datei (1310, 1311, 1312, 1313), die der Maschine zugewiesen ist, in der dieses Ereignis aufgetreten ist, und einen Schritt, bei dem diese Datei von dem spezifischen Dienst (11) gelesen wird, umfaßt.

6. Verfahren nach einem der Ansprüche 2 bis 5, **dadurch gekennzeichnet, daß** eine dritte Zeichenkette dem Namen der Station des Netzes und/oder des Mehrstationssystems entspricht, dem die Maschine (20, 21, 22, 23), in der das Ereignis aufgetreten ist, zugewiesen ist.

7. Verfahren nach Anspruch 5 oder 6, **dadurch gekennzeichnet, daß** die von der Abfangsanwendung (201, 211, 221, 231) übertragene Nachricht von dem Dienst (11) nach dem Schritt des Lesens der Datei (1310, 1311, 1312, 1313) gelöscht wird.

8. Verfahren nach einem der Ansprüche 3 bis 7, **dadurch gekennzeichnet, daß** es bei der Initialisierung des Servers (10) einen Schritt der Installation des Dienstes (11) zwischen dem Manager (12) des zentralisierten Journals (121) des Servers und wenigstens dieser Maschine (20-23) umfaßt, wobei der Installationsschritt einen Schritt, in dem er sich dem Server als Dienst deklariert, und einen Schritt, bei dem das spezifische Verzeichnis (131) erzeugt wird, in dem alle Dateien (1310 bis 1313), die den Maschinen (20-23) zugeordnet sind, zusammengefaßt sind, umfaßt.

9. Verfahren nach Anspruch 8, **dadurch gekennzeichnet, daß** der Installationsschritt einen Schritt umfaßt, bei dem Operationen ausgeführt werden, die für die Ausführung einer Funktion des Überwachens des Schreibens in das spezifische Verzeichnis (131) notwendig sind, um das Aufwecken des spezifischen Servers (11) auszulösen, sobald eine Operation erfolgt, in der in das spezifische Verzeichnis (131) geschrieben wird.

10. Datenverarbeitungssystem, das ein zentralisiertes Ereignisjournal (121) enthält, das in einem Server (10) enthalten ist und dem ein Journal-Manager zugeordnet ist, wobei der Server (10) das Management wenigstens einer Maschine (20-23) des Datenverarbeitungssystems ausführt, wobei die Maschine (20-23) wenigstens eine Abfangsanwendung (201, 211, 221, 231) ausführt, die dazu bestimmt ist, Ereignisse zu erzeugen, **dadurch gekennzeichnet, daß** es einen Dienst (11) umfaßt, der das durch einen der Ansprüche 1 bis 9 definierte Verfahren ausführt.

## Claims

1. Method of identification of an event in a centralised event log (121) included in a server (10) of an information-processing system, and associated with a log manager (12), said server (10) administering at least one machine (20-23) of the information-processing system, said machine (20-23) causing at least one capture application (201, 211, 221, 231) to function, said application being intended to generate events, **characterised in that** it comprises:
a step in which said capture applications capture an event comprising information making it possible to identify, inter alia, the machine (20-23) on which the event occurred,
a step in which said capture application transmits this event to the server (10),
a step in which a specific service (11) of this server receives this
event,
a step in which an event message is constructed by the specific service (11) on the basis of the information contained in the event, the event message including an identification of the specific service (11) together with said identification of the machine (20, 21, 22, 23) on which the event occurred, and
a step in which the event message thus constructed by the specific service (11) is written to the centralised event log (121).

2. Method according to Claim 1, **characterised in that** the event message is constructed so that the specific service (11) is declared to the log manager (12) as being an application of which the name is formed by at least two character strings, a first character string corresponding to the name of the service (11), and a second character string corresponding to the name of the machine (20, 21, 22, 23) where the event occurred, the character strings being separated from each other by separation means.

3. Method according to Claim 1 or 2, **characterised in that** it consists in assigning to the machine storage means (13) of the files type (1310, 1311, 1312, 1313), in regrouping these files (1310, 1311, 1312, 1313) into the same directory (131) of storage means (13) of the server (10), and in using the file name assigned to each machine in order to construct the second character string, if this file name corresponds to the name of the machine.

4. Identification method according to Claim 2 or 3, **characterised in that** the service (11) uses a conversion table that makes it possible to associate each file name with a machine name and thus to construct the second character string of the source field.

5. Identification method according to Claim 3 or 4, **characterised in that** the reception of the event by said capture application comprises a step of recording this event in the file (1310, 1311, 1312, 1313) assigned to the machine on which this event occurred, and a step in which this file is read by the specific service (11).

6. Method according to one of Claims 2 to 5, **characterised in that** a third character string corresponds to the name of the station of the network and/or the multistation system associated with the machine (20, 21, 22, 23) on which the event occurred.

7. Method according to Claim 5 or 6, **characterised in that** the message transmitted by the capture application (201, 211, 221, 231) is erased by the service (11) after said step of reading the file (1310, 1311, 1312, 1313).

8. Method according to one of Claims 3 to 7, **characterised in that**, on initialisation of the server (10), it comprises a step of installation of the service (11) between the manager (12) of the centralised log (121) of the server (10) and at least the machine (20-23), the installation step comprising a step of declaration to the server as a service, and a step of creation of the specific directory (131) containing all the files (1310 to 1313) associated with the machine (20-23).

9. Method according to Claim 8, **characterised in that** the step of installation comprises a step of executing operations necessary for the implementation of a function of monitoring writing to the specific directory (131) in order to trigger the activation of the specific server (it) as soon as a write operation takes place in the specific directory (131).

10. Information-processing system comprising a centralised event log (121) included in a server (10) associated with a log manager (12), said server (10) administering at least one machine (20-23) of the information-processing system, said machine (20-23) causing at least one capture application (201, 211, 221, 231) to function, said application being intended to generate events, **characterised in that** it comprises a service (11) implementing the method defined by one of Claims 1 to 9.
